(19) Europäisches Patentamt / European Patent Office / Office européen des brevets

(11) **EP 2 112 710 A1**

(12) **EUROPEAN PATENT APPLICATION**
published in accordance with Art. 153(4) EPC

(43) Date of publication:
**28.10.2009 Bulletin 2009/44**

(51) Int Cl.:
***H01M 14/00*** *(2006.01)* ***H01L 31/04*** *(2006.01)*

(21) Application number: **04791996.4**

(22) Date of filing: **04.10.2004**

(86) International application number:
**PCT/JP2004/014584**

(87) International publication number:
**WO 2005/045984 (19.05.2005 Gazette 2005/20)**

(84) Designated Contracting States:
**DE ES FR IT NL**

(30) Priority: **06.10.2003 JP 2003347538**

(71) Applicant: **NGK Spark Plug Co., Ltd.**
**Nagoya-shi,**
**Aichi 467-8525 (JP)**

(72) Inventors:
• **GONDA, Ichiro c/o NGK PLUS CO L.T.D**
**Nagoya-shi,Aichi 467-8525 (JP)**

• **OKUYAMA, Yasuo c/o NGK SPARK PLUS CO,LTD**
**Nagoya-shi,Aichi 467-8525 (JP)**
• **FURUSAKI, Keizo c/o NGK SPARK PLUG CO LTD**
**Nagoya-shi,Aichi 467-8525 (JP)**

(74) Representative: **Grünecker, Kinkeldey,**
**Stockmair & Schwanhäusser**
**Anwaltssozietät**
**Leopoldstrasse 4**
**80802 München (DE)**

(54) **DYE-SENSITIZED SOLAR CELL**

(57)    According to a first aspect of the present invention, there is provided a dye-sensitized solar cell, comprising: a first base member having a light-transmitting substrate, a light-transmitting conductive layer formed on a surface of the light-transmitting substrate and a semiconductor electrode formed on a surface of the light-transmitting conductive layer and containing a sensitizing dye; a second base member having a ceramic substrate and a catalyst layer formed on a surface of the ceramic substrate in such a manner that the catalyst layer faces the semiconductor electrode; and an electrolyte layer formed between the semiconductor electrode and the catalyst layer. The dye-sensitized solar cell of the first aspect of the present invention shows a sufficient power generation efficiency and excellent durability.

**FIG.3**

**Description**

Technical Field

The present invention relates to a dye-sensitized solar cell for directly converting light energy into electrical energy, in particular, of the type having a high power generation efficiency and being provided with a ceramic substrate to attain high strength.

Background Art

Solar cells utilizing single-crystal silicon, polycrystalline silicon, amorphous silicon, HIT (Heterojunction with Intrinsic Thin-layer) formed by varying combinations thereof have currently been put to practical use and become major techniques in solar power generation technology. These silicon solar cells have excellent photoelectric conversion efficiencies of nearly 20%. Dye-sensitized solar cells proposed by Gratzel et al. in Japanese Laid-Open Patent Publication No. Hei-01-2203 80 and Nature (vol. 353, pp.737-740, 1991) have also come to attention as low-priced solar cells. The solar cells of this proposed type are each provided with porous titania electrodes supporting thereon sensitizing dyes, counter electrodes and electrolytic materials interposed between the titania electrodes and the counter electrodes to show lower photoelectric conversion efficiencies than those of the currently available silicon solar cells but allow significant reductions in material and processing costs. Although glass substrates are often used in the dye-sensitized solar cells, solar cells using resinous substrates have been proposed by Hagfelt (Uppsala University, Sweden) in 2001. The resinous substrates are lower in price than the glass substrates, so that the use of such resinous substrates in the solar cells is expected to provide further cost reductions by processing efficiency improvements.

However, the silicon solar cells require high energy costs for material processing and have many problems to be addressed, such as environmental burdens, as well as cost and material supply limitations. Further, the resinous substrates have gas permeable properties so that the solar cells using the resinous substrates may not be sufficient in durability for long-time use.

Disclosure of the Invention

The present invention has been made according to the above circumstances and aims to provide a die-sensitized solar cell having a practically sufficient power generation efficiency, high strength and excellent durability and enabling a significant cost reduction thereof.

According to a first aspect of the present invention, there is provided a dye-sensitized solar cell, comprising: a first base member having a light-transmitting substrate, a light-transmitting conductive layer formed on a surface of the light-transmitting substrate and a semiconductor electrode formed on a surface of the light-transmitting conductive layer and containing a sensitizing dye; a second base member having a ceramic substrate and a catalyst layer formed on a surface of the ceramic substrate in such a manner that the catalyst layer faces the semiconductor electrode; and an electrolyte layer formed between the semiconductor electrode and the catalyst layer.

According to a second aspect of the present invention, there is provided a dye-sensitized solar cell, comprising: a first base member having a light-transmitting substrate and a light-transmitting catalyst layer formed on a surface of the light-transmitting substrate; a second base member having a ceramic substrate, a conductive layer formed on a surface of the ceramic substrate and a semiconductor electrode containing a sensitizing dye and formed on a surface of the conductive layer in such a manner that the semiconductor electrode faces the light-transmitting catalyst layer; and an electrolyte layer formed between the light-transmitting catalyst layer and the semiconductor electrode.

Brief Description of Drawings

FIG. 1 is a plan view of a dye-sensitized solar cell, when viewed from the side of a light-transmitting substrate of a first base member of the solar cell, according to a first embodiment of the present invention.
FIG. 2 is a plan view of the dye-sensitized solar cell, when viewed from the side of a ceramic substrate of a second base member of the solar cell, according to the first embodiment of the present invention.
FIG. 3 is a sectional view of the dye-sensitized solar cell according to the first embodiment of the present invention.
FIG. 4 is an enlarged schematic view of part of a semiconductor electrode, a sensitizing dye and an electrolyte layer of the dye-sensitized solar cell according to the first embodiment of the present invention.
FIG. 5 is a plan view of a dye-sensitized solar cell, when viewed from the side of a light-transmitting substrate of a first base member of the solar cell, according to a modification of the first embodiment of the present invention.

FIG. 6 is a sectional view of the dye-sensitized solar cell according to the modification of the first embodiment of the present invention.

FIG. 7 is a sectional view of a dye-sensitized solar cell according to a second embodiment of the present invention.

FIG. 8 is a sectional view of a dye-sensitized solar cell according to a modification of the second embodiment of the present invention.

Best Mode for Carrying Out the Invention

Hereinafter, exemplary embodiments of the present invention will be described below in detail with reference to the drawings. It should be noted that like parts and portions are designated by like reference numerals in the following description to omit repeated explanations thereof.

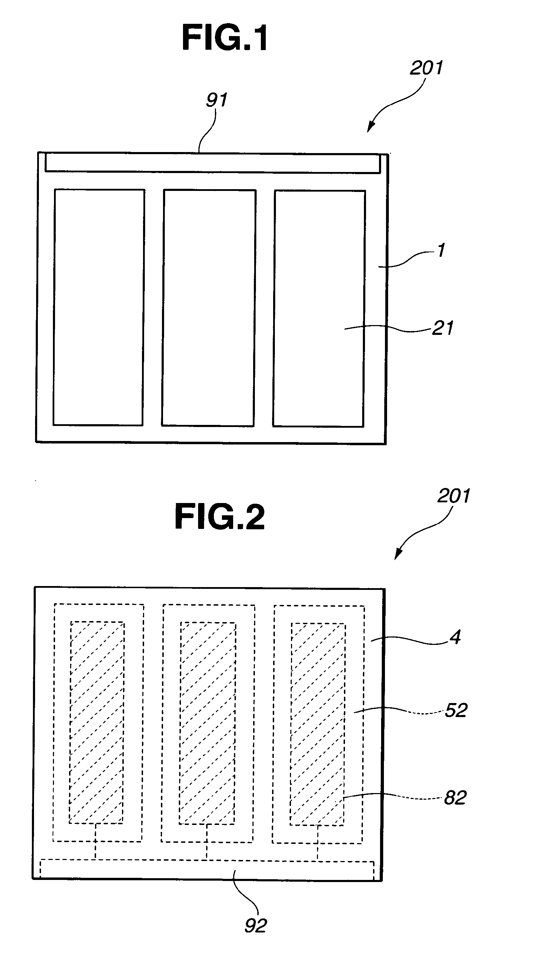

A dye-sensitized solar cell 201 according to a first embodiment of the present invention includes a first base member 101, a second base member 102 and an electrolyte layer 6 as shown in, for example, FIGS. 1 to 4. The first base member 101 has a light-transmitting substrate 1, a light-transmitting conductive layer 21 formed on a surface of the light-transmitting substrate 1 and a semiconductor electrode 3 formed on a surface of the light-transmitting conductive layer 21 and containing therein a sensitizing dye 31. The second base member 102 has a ceramic substrate 4 and a catalyst layer 52 formed on a surface of the ceramic substrate 4.

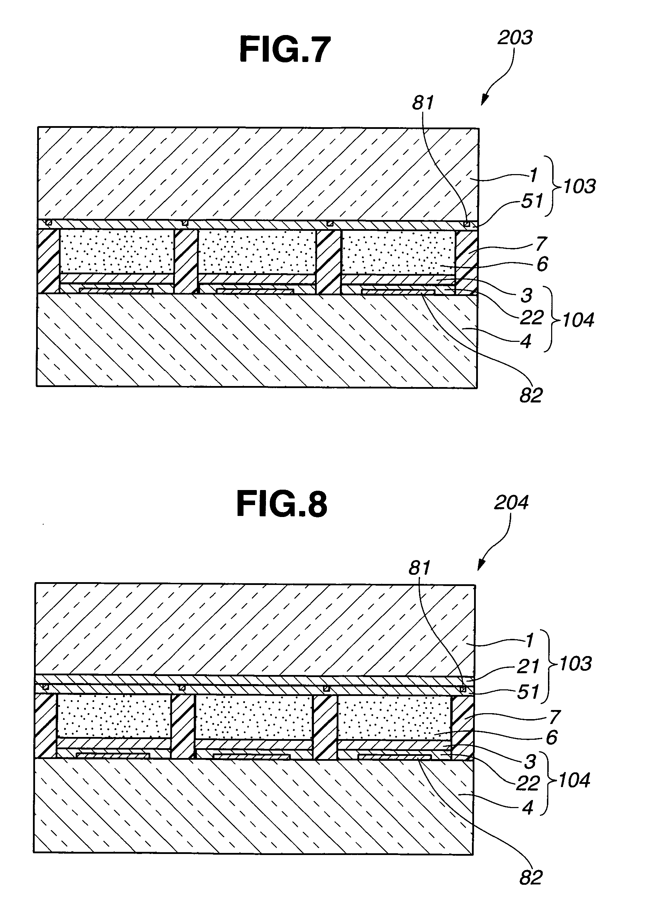

A dye-sensitized solar cell 203 according to a second embodiment of the present invention includes a first base member 103, a second base member 104 and an electrolyte layer 6 as shown in, for example, FIG. 7. The first base member 103 has a light-transmitting substrate 1 and a light-transmitting catalyst layer 51 formed on a surface of the light-transmitting substrate 1. The second base member 104 has a ceramic substrate 4, a conductive layer 22 formed on a surface of the ceramic substrate 4 and a semiconductor electrode 3 formed on a surface of the conductive layer 22 and containing therein a sensitizing dye 31.

The semiconductor electrode 3 is located on the side of the light-transmitting substrate 1 in the dye-sensitized solar cell 201 according to the first embodiment of the present invention and on the side of the ceramic substrate 4 in the dye-sensitized solar cell 203 according to the second embodiment of the present invention. Although there is a difference in the locations of the semiconductor electrodes 3 between the dye-sensitized solar cell 201 and the dye-sensitized solar cell 203, the dye-sensitized solar cells 201 and 203 are similar in structure and both show sufficient power generation efficiencies. The common structural components of the solar cells 201 and 203 such as the light-transmitting substrates 1, the semiconductor electrodes 3, the ceramic substrates 4 and the electrolyte layers 6 can be the same. The catalyst layer 52 of the dye-sensitized solar cell 201 does not necessarily have a light-transmitting property but may have a light-transmitting property as is the case with the light-transmitting catalyst layer 51 of the dye-sensitized solar cell 203. The conductive layer 22 of the dye-sensitized solar cell 203 does not necessarily have a light-transmitting property but may have a light-transmitting property as is the case with the light-transmitting conductive layer 21 of the dye-sensitized solar cell 201.

As the light-transmitting substrate 1, there may be used a substrate of glass, resin sheet or the like. The resin sheet is not particularly restricted. Examples of the resin sheet include sheets of polyesters such as polyethylene terephthalate and polyethylene naphthalate, polyphenylene sulfides, polycarbonates, polysulfones and polyethylidene norbornenes.

The light-transmitting substrate 1 varies in thickness depending on the material thereof. The thickness of the light-transmitting substrate 1 is not particularly restricted. It is desirable that the thickness of the light-transmitting substrate 1 falls within a range that the substrate 1 shows a visible light transmissivity of 60 to 99%, especially 85 to 99%, as indicated by the following transmittance. Herein, the transmittance means that the transmissivity of visible light having a wavelength of 400 to 900 nm is 10% or higher.

$$\text{Transmittance (\%)} = (\text{the amount of light passing through the light-transmitting substrate 1 / the amount of light incident on the light-transmitting substrate 1}) \times 100$$

The light-transmitting conductive layer 21 is not particularly restricted as long as it has light-transmitting and conducting properties. As the light-transmitting conductive layer 21, there may be used a thin film of conductive oxide, a carbon thin film or the like. Examples of the conductive oxide include indium oxide, tin-doped indium oxide (ITO), tin oxide and fluorine-doped tin oxide (FTO).

The light-transmitting conductive layer 21 varies in thickness depending on the material thereof. The thickness of the light-transmitting conductive layer 21 is not particularly restricted. It is desirable that the thickness of the light-transmitting conductive layer 21 falls within a range that the layer 21 shows a surface resistively of 100 $\Omega/cm^2$ or lower, especially 1 to 10 $\Omega/cm^2$. The definition of transmittance and the desirable transmittance range of the light-transmitting conductive layer 21 are the same as those of the light-transmitting substrate 1.

The conductive layer 22 does not necessarily have a light-transmitting property but may have a light-transmitting property. The conductive layer 22 can be made of the same material as that of the light-transmitting conductive layer 21.

The thickness of the conductive layer 22 is not particularly restricted due to the fact that the conductive layer 22 does not necessarily have a light-transmitting property. In view of the cost, however, the conductive layer 22 is preferably in the form of a thin film. It is desirable that the thickness of the conductive layer 22 falls within a range that the layer 22 shows a surface resistivity of 100 $\Omega/cm^2$ or lower, especially 1 to 10 $\Omega/cm^2$.

The light-transmitting conductive layer 21 and the conductive layer 22 can be prepared, for example, through the application of pastes containing therein fine particles of conductive oxide or carbon to the surface of the light-transmitting substrate 1 and the surface of the ceramic substrate 4, respectively. Herein, the paste application method is exemplified by various processes such as a doctor blade process, a squeegee process and a spin coat process. Alternatively, the light-transmitting conductive layer 21 and the conductive layer 22 may be prepared through the deposition of conductive oxides onto the respective surfaces of the light-transmitting substrate 1 and the ceramic substrate 4 by a sputtering or vapor deposition process.

As the sensitizing dye 31, there may be used a complex dye or an organic dye for improved photoelectric conversion. Examples of the complex dye include metal complex dyes. Examples of the organic dye include polymethine dyes and merocyanine dyes. Specific examples of the metal complex dyes include ruthenium complex dyes and osmium complex dyes. Among others, especially preferred are ruthenium complex dyes. In order to extend the photoelectric conversion wavelength range of the sensitizing dye and thereby obtain an improvement in photoelectric conversion efficiency, two or more kinds of sensitizing dye compounds having different photoelectric conversion wavelength ranges can be used in combination. In this case, it is desirable to select the kinds and quantity ratio of the sensitizing dye compounds to be used in combination according to the wavelength range and intensity distribution of light irradiated onto the sensitizing dye compounds. Further, the sensitizing dye preferably includes a functional group for bonding to the semiconductor electrode 3. Examples of the functional group include a carboxyl group, a sulfonic group and a cyano group.

The semiconductor electrode 3 has an electrode body to which the sensitizing dye 31 is adhered.

The electrode body of the semiconductor electrode 3 can be made of a metal oxide material, a metal sulfide material or the like. Examples of the metal oxide material include titania, tin oxide, zinc oxide and niobium oxide such as niobium pentoxide, tantalum oxide and zirconia. As the metal oxide material, there may also be used double oxide such as strontium titanate, calcium titanate and barium titanate. Examples of the metal sulfide material include zinc sulfide, lead sulfide and bismuth sulfide.

The preparation method of the electrode body of the semiconductor electrode 3 is not particularly restricted. The electrode body of the semiconductor electrode 3 can be prepared by, for example, applying a paste containing therein fine particles of metal oxide or metal sulfide to each of the surface of the light-transmitting conductive layer 21 and the surface of the conductive layer 22, and then, sintering the paste. The paste application method is not also particularly restricted and is herein exemplified by a screen printing process, a doctor blade process, a squeegee process, a spin coat process and the like. The thus-prepared electrode body is in the form of an aggregate in which the fine particles are agglomerated. Alternatively, the electrode body of the semiconductor electrode 3 may be prepared by applying a colloid in which fine particles of metal oxide, metal sulfide or the like are dispersed together with a small quantity of organic polymer to each of the surface of the light-transmitting conductive layer 21 and the surface of the conductive layer 22, drying the colloid and removing the organic polymer by heat decomposition. The colloid can be applied by any method such as a screen printing process, a doctor blade process, a squeegee process or a spin coat process. The thus-prepared electrode body is also in the form of an aggregate in which the fine particles are agglomerated.

The thickness of the semiconductor electrode 3 is not particularly restricted and can be adjusted to 0.1 to 100 $\mu m$. It is desirable that the thickness of the semiconductor electrode 3 ranges from 1 to 30 $\mu m$, especially 2 to 25 $\mu m$. When the thickness of the semiconductor electrode 3 is in the range of 0.1 to 100 $\mu m$, it is possible to achieve adequate photoelectric conversion for improvement in power generation efficiency.

Further, the semiconductor electrode 3 is desirably subjected to heat treatment in order to increase the strength of the semiconductor electrode 3 and the adhesion of the semiconductor electrode 3 with the light-transmitting conductive layer 21 or the conductive layer 22. The temperature and time of the heat treatment are not particularly restricted. It is desirable to control the heat treatment temperature to within 40 to 700C°, especially 100 to 500C°, and to control the heat treatment time to within 10 minutes to 10 hours, especially 20 minutes to 5 hours. In the case of using a resin sheet as the light-transmitting substrate 1, it is desirable that the heat treatment is performed at 100 to 170C°, especially 120 to 150C°, so as not to cause a thermal degradation of the resin sheet.

The method of adhering the sensitizing dye 31 to the electrode body of the semiconductor electrode 3 is not particularly restricted. The sensitizing dye 31 can be adhered to the electrode body of the semiconductor electrode 3 by, for example, immersing the electrode body into a solution in which the sensitizing dye 31 dissolved with an organic solvent, impregnating the electrode body with the solution, and then, removing the organic solvent. Alternatively, the sensitizing dye 31 may be adhered to the electrode body of the semiconductor electrode 3 by applying a solution in which the sensitizing dye 31 is dissolved with an organic solvent to the electrode body, and then, removing the organic solvent. The solution application method is herein exemplified by a wire bar process, a slide hopper process, an extrusion process, a curtain coating process, a spin coat process, a spray coat process and the like. The solution can alternatively be applied by a printing process such as an offset printing process, a gravure printing process or a screen printing process.

The adhesion amount of the sensitizing dye 31 preferably ranges from 0.01 to 1 mmol, especially 0.5 to 1 mmol, per 1g of the electrode body. When the adhesion amount of the sensitizing dye 31 is in the range of 0.01 to 1 mmol, the semiconductor electrode 3 allows sufficient photoelectric conversion. If some of the sensitizing dye 31 exists free around the electrode without being adhered to the electrode body, the efficiency of photoelectric conversion in the semiconductor electrode 3 may be lowered. It is thus desirable to remove excessive sensitizing dye by washing the semiconductor electrode 3 after the process of adhering the sensitizing dye 31 to the electrode body. The removal of the excessive sensitizing dye can be performed by washing with an organic solvent such as a polar solvent e.g. acetonitrile or an alcohol solvent through the use of a washing bath. In order to adhere a great amount of sensitizing dye to the electrode body, the electrode body is desirably subjected to heating before the impregnation or application process. In this case, it is further preferred that the impregnation or application process is performed at temperatures of 40 to 80°C immediately after the heat treatment and before the electrode body reaches an ambient temperature, so as to avoid water from being adsorbed onto a surface of the electrode body.

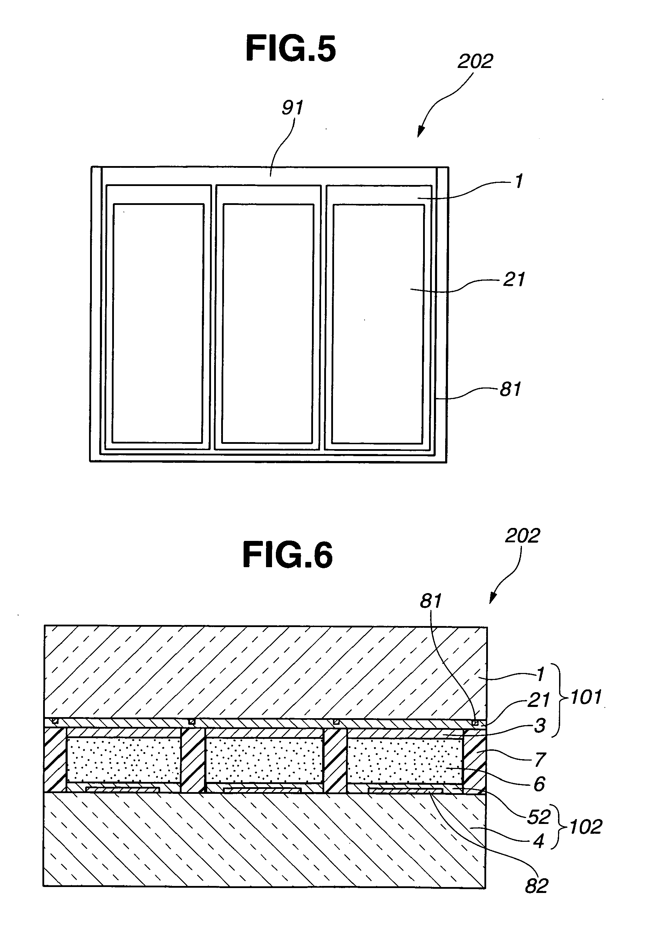

There may additionally be provided a collector electrode 81 between the light-transmitting substrate 1 and the light-transmitting conductive layer 21 or in the surface of the light-transmitting conductive layer 21, as shown in FIGS. 5 and 6, thereby yielding a dye-sensitized solar cell 202 according to a modification of the first embodiment.

The collector electrode 81 is arranged around the semiconductor electrode 3 or arranged in such a manner as to divide the semiconductor electrode 3 into given regions. When the collector electrode 81 is arranged to divide the semiconductor electrode 3 into the given regions, there are not only a case where the collector electrode 81 is made entirely continuous but also a case where the collector electrode 81 is partially discontinued. More specifically, the planer form of the collector electrode 81 can be in a grid pattern, a network pattern, a comb pattern, a radial pattern or the like. The width and thickness of the collector electrode 81 are not particularly restricted and can be set as appropriate in view of the electrical resistance, cost and the like. The collector electrode 81 can be made of noble metal such as platinum or gold, or metal such as tungsten, titanium or nickel. The collector electrode 81 does not come into direct contact with any electrolytic material and the like when provided between the light-transmitting substrate 1 and the light-transmitting conductive layer 21 or in the surface of the light-transmitting conductive layer 21 and protected by a resin, glass or the like. By contrast, the collector electrode 81 comes into direct contact with some electrolytic material and the like when provided in the surface of the light-transmitting conductive layer 21 without being protected by a resin, glass or the like. In this way, the collector electrode 81 comes or does not come into direct contact with the electrolytic material and the like. Tungsten, titanium and nickel, which are high in corrosion resistance and low in cost, can be suitably used as the material of the collector electrode 81 in either case. Especially preferred is tungsten having excellent corrosion resistance. Further, the collector electrode 81 can be prepared by physical vapor deposition such as a magnetron sputtering process or an electron-beam vapor deposition process using a mask of predetermined pattern. The collector electrode 81 may alternatively be prepared by a screen printing process using a paste.

Similarly, a collector electrode 81 may be provided between the light-transmitting substrate 1 and the light-transmitting catalyst layer 51 in the dye-sensitized solar cell 203 according to the second embodiment.

There may be provided a light-transmitting conductive layer 21 and a collector electrode 81 between the light-transmitting conductive layer 21 and the light-transmitting catalyst layer 51, as shown in FIG. 8, thereby yielding a dye-sensitized solar cell 204 according to a modification of the second embodiment.

In the case of each of the dye-sensitized solar cells 203 and 204, the collector electrode 81 can be prepared in the same form by the same method using the same material as in the case of the dye-sensitized solar cell 202. Although the location of the collector electrode 81 is not also particularly restricted, it is desirable to arrange the collector electrode 81 in such a manner as to provide an improvement in charge collection efficiency without causing a large loss in the transmission of light to the semiconductor electrode 3.

The ceramic substrate 4 can be prepared from various ceramic materials such as oxide ceramic, nitride ceramic and carbide ceramic. Examples of the oxide ceramic include alumina, mullite and zirconia. Examples of the nitride ceramic include silicon nitride, sialon, titanium nitride and aluminum nitride. Examples of the carbide ceramic include silicon carbide, titanium carbide and aluminum carbide.

As the ceramic material, preferred are aluminum, silicon nitride and zirconia. Alumina is especially preferred. Alumina has high corrosion resistance and strength and superior electrical insulating properties. The use of alumina in the ceramic substrate 4 thus allows the dye-sensitized solar cell 201, 203 to achieve high durability. In the case where the ceramic substrate 4 contains alumina, it is desirable that the amount of alumina in the ceramic substrate 4 is 80% by mass or greater, especially 90% by mass or greater, more especially 95% by mass or greater (100% by mass inclusive), based on the total ceramic amount of the ceramic substrate 4.

It is also desirable that the ceramic substrate 4 is closely packed. In the case of using alumina, for example, the relative density of the ceramic substrate 4 is preferably 90% or higher, more preferably 93% or higher, still more preferably 95% or higher. The dye-sensitized solar cell 201, 203 becomes higher in durability with the use of such a closely-packed and high-strength ceramic substrate 4.

The thickness of the ceramic substrate 4 is not particularly restricted and can be adjusted to 100 μm to 5 mm, especially 500 μm to 5 mm, more especially 1 to 5 mm. It is desirable that the thickness of the ceramic substrate 4 ranges from 300 μm to 3 mm. When the thickness of the ceramic substrate 4 is in the range of 100 μm to 5 mm, desirably 300 μm to 3 mm, the ceramic substrate 4 has sufficient strength to serve as a supporting layer so that the dye-sensitized solar cell 201, 203 can attain excellent durability.

The production method of the ceramic substrate 4 is not particularly restricted. The ceramic substrate 4 can be generally produced by preparing a slurry containing therein a ceramic powder, a sintering aid, a binder and a plasticizer, forming the slurry into a green sheet by a doctor blade process or the like and sintering the green sheet at a given temperature for a given time period appropriate to the kind of the ceramic material.

The catalyst layer 52 can be made of either a material having catalytic activity and being electrochemically stable (hereinafter just referred to as a "catalytically active material") or at least one of metals, conductive oxides and conductive resins showing no catalytic activity in itself but containing therein a catalytically active material. Examples of the catalytically active material include platinum, rhodium and carbon black. These substances also have conducting properties. It is preferred that the catalyst layer 52 is made of platinum or rhodium having high catalytic activity and electrochemical stability. Especially preferred is platinum, which has high catalytic activity and electrochemical stability and is less prone to being dissolved by an electrolytic solution. In the case of using any of the metals, conductive oxides and conductive resins showing no catalytic activity in itself, it is desirable that the catalytically active material is contained in an amount of 1 to 99 parts by mass, especially 50 to 99 parts by mass, per 100 parts by mass of the catalytically inactive metal, conductive oxide and/or conductive resin material. Examples of the catalytically inactive metals include copper, aluminum, nickel and chrome. Examples of the catalytically inactive conductive oxides include the same conductive oxide materials as used to prepare the light-transmitting conductive layer 21. Examples of the catalytically inactive conductive resins include polyaniline, polypyrrole and polyacethylene.

The catalyst layer 52 may alternatively be made of a resinous composition prepared by mixing a catalytically active material and a conductive material or materials into a resin material. The resin material is not particularly restricted and can be either a thermoplastic resin or a thermosetting resin. Examples of the thermoplastic resin include thermoplastic polyester resins, polyamide resins, polyolefin resins and polyvinyl chloride resins. Examples of the thermosetting resin include epoxy resins, thermosetting polyester resins and phenol resins. Examples of the catalytically active material include platinum, rhodium and carbon black as in the case with the above. Examples of the conductive materials include metals such as copper, aluminum, nickel and chromium and conductive polymers such as polyaniline, polypyrrole and polyacethylene. These conductive materials can be used solely or in combination thereof.

In this way, the catalyst layer 52 can be prepared from either the catalytically active and electrically conductive material or at least one of the metals, the conductive oxides and the conductive resins showing no catalytic activity in itself and containing therein the catalytically active material. The catalyst layer 52 may be a layer of one kind of material or a mixed layer of two or more kinds of materials. Further, the catalyst layer 52 may have a single layer structure or a multilayer structure including more than one of metal layers, conductive oxide layers, conductive resin layers and mixed layers of two or more of metals, conductive oxides and conductive resins.

The thickness of the catalyst layer 52 is not particularly restricted and can be adjusted to 3 nm to 10 μm, especially 3 nm to 1 μm, in either of the cases where the catalyst layer 52 has a single layer structure and where the catalyst layer 52 has a multilayer structure. When the thickness of the catalyst layer 52 is in the range of 3 nm to 10 μm, the catalyst layer 52 becomes sufficiently low in resistance.

The light-transmitting catalyst layer 51 can be prepared using the same material as used for the catalyst layer 52. As in the case of the catalyst layer 52, the light-transmitting catalyst layer 51 may be a layer of one kind of material or a mixed layer of two or more kinds of material and may have a single layer structure or a multilayer structure.

The definition of transmittance and the desirable transmittance range of the light-transmitting catalyst layer 51 are the same as those of the light-transmitting substrate 1. In order for the light-transmitting catalyst layer 51 to attain an adequate transmittance, the light-transmitting catalyst layer 51 is preferably formed into a thin film using a material having an excellent light-transmitting property.

The thickness of the light-transmitting catalyst layer 51 can be adjusted to 1 nm to 50 μm, especially 20 nm to 1 μm, in either of the cases where the catalyst layer 51 has a single layer structure and where the catalyst layer 51 has a multilayer structure. When the thickness of the light-transmitting catalyst layer 51 is in the range of 1 nm to 50 μm, the light-transmitting catalyst layer 51 shows an adequate light-transmitting property and becomes low in resistance.

The catalyst layer 52, when comprising the metal or conductive oxide, can be prepared through the application of a paste containing therein fine particles of the metal or conductive oxide to the surface of the ceramic substrate 4. The light-transmitting catalyst layer 51, when comprising the metal or conductive oxide, can be prepared through the application of a paste containing therein fine particles of the metal or conductive oxide to the surface of the light-transmitting substrate 1 or, if the light-transmitting conductive layer 21 is provided, to the surface of the light-transmitting conductive layer 21. The paste application method is exemplified by various methods such as a doctor blade process, a squeegee process and a spin coat process. Alternatively, the catalyst layer 52 and the light-transmitting catalyst layer 51 may be prepared through the deposition of the metal or the like to the respective surfaces of the ceramic substrate 4 and the light-transmitting substrate 1 by a sputtering process, a vapor deposition process or the like. The catalyst layer 52 and the light-transmitting catalyst layer 51, when comprising the conductive resin with the catalytically active material, can be prepared by kneading the resin with both the catalytically active material and the conductive material in powdery or fibrous form through the use of a kneading device such as a Banbury mixer, an internal mixer or an open roll, molding the thus-kneaded substance into films, and then, bonding the films to the surface of the ceramic substrate 4 and the surface of the light-transmitting substrate 1, respectively. The catalyst layer 52 and the light-transmitting catalyst layer 51 may alternatively be prepared by dissolving or dispersing the resin composition into a solvent, applying the thus-obtained solution or dispersoid to the respective surfaces of the ceramic substrate 4 and the light-transmitting substrate 1, drying to remove the solvent, and then, heating as required.

There may be provided a collector electrode 82 between the ceramic substrate 4 and the catalyst layer 52 in either of the dye-sensitized solar cell 201 according to the first embodiment and the dye-sensitized solar cell 202 according to one modification of the first embodiment. There may preferably be provided a collector electrode 82 between the ceramic substrate 4 and the conductive layer 22 in either of the dye-sensitized solar cell 203 according to the second embodiment and the dye-sensitized solar cell 203 according to one modification of the second embodiment in which the semiconductor electrode 3 is located on the surface of the conductive layer 22.

When each of the catalyst layer 52 and the conductive layer 22 is made of noble metal such as platinum having an excellent conducting property, the collector electrode 82 is not necessarily provided but is desirably provided in view of the cost. Although each of the catalyst layer 52 and the conductive layer 22 is preferably formed into a thin film due to the fact that noble metal such as platinum is expensive, the thin-film layer 52, 22 becomes high in resistance. It is thus possible to obtain an improvement in charge collection efficiency and a reduction in cost by providing the collector electrode 82 of metal such as tungsten or titanium being low in cost and having excellent conductivity and corrosion resistance or nickel being low in cost and generally used as a corrosion resistant conductive material. When the catalyst layer 52 is prepared from the composition in which the catalytically active material is mixed with the conductive oxide and when the conductive layer 22 is prepared the conductive oxide, the catalyst layer 52 and the conductive layer 22 become further high in resistance. In either case, the collector electrode 82 is preferably provided for improvement in charge collection efficiency.

The form of the collector electrode 82 is not particularly restricted. The collector electrode 82 can be provided in plane form or provided in linear form so as to divide the catalyst layer 52 or the conductive layer 22 into given regions. In order for the collector electrode 82 to be low in resistance, it is desirable that the collector electrode 82 is similar in plane form to the catalyst layer 52 or the conductive layer 22 and has large an area as 50% or more, especially 65% or more, more especially 80% or more (including the same size), of the area of the catalyst layer 52 or the conductive layer 22. It is further desirable that the collector electrode 82 is similar in figure to the catalyst layer 52 or the conductive layer 22. In the case where the collector electrode 82 is provided in such a manner as to divide the catalyst layer 52 or the conductive layer 22 into the given regions, the form of the collector electrode 82 can be in a grid pattern, a network pattern, a comb pattern, a radial pattern or the like. There are not only a case where the collector electrode 82 is made entirely continuous but also a case where the collector electrode 82 is partially discontinued when the collector electrode 82 is arranged to divide the catalyst layer 52 or the conductive layer 22 into the given regions. The thickness of the collector electrode 82 is not particularly restricted and can be set as appropriate in view of the electrical resistance, cost and the like. Further, the collector electrode 82 can be formed by physical vapor deposition such as a magnetron sputtering process or an electron-beam vapor deposition process using a mask of predetermined pattern or by a screen printing process using a paste when the catalyst layer 52 or the conductive layer 22 is made of either of metal and metal oxide.

The collector electrode 82 may alternatively be provided in the surface of the catalyst layer 52 or the conductive layer 22. At this time, the collector electrode 82 comes into direct contact with some electrolytic material when provided in the surface of the catalyst layer 52 without being protected by a resin, glass or the like in the dye-sensitized solar cell 201 where the semiconductor electrode 3 is located on the side of the light-transmitting substrate 1. The collector electrode 82 does not come into direct contact with any electrolytic material when protected by a resin, glass or the like. The collector electrode 82 comes into contact with some electrolytic material immersed in the semiconductor electrode 3 when provided between the conductive layer 22 and the semiconductor electrode 3 in the dye-sensitized solar cell 203 where the semiconductor electrode is located on the side of the ceramic substrate 4. In this way, the collector electrode 81 comes or does not come into direct contact with the electrolytic material. Noble metal such as platinum or gold, tungsten, titanium or nickel can be used as the material of the collector electrode 82 in either case. Among those, tungsten, titanium and nickel, which are high in corrosion resistance and low in cost, are preferred. Especially preferred is tungsten having excellent corrosion resistance.

The electrolyte layer 6 generally contains an electrolyte, a solvent and various additives. Examples of the electrolyte include: (1) $I_2$ and an iodide; (2) $Br_2$ and a bromide; (3) a metal complex such as a ferrocyanide-ferricyanide complex or a ferrocene-ferricinium ion complex; (4) a sulfur compound such as sodium polysulfide or alkylthiol-alkyldisulfide; (5) a viologen dye; and (6) hydroquinone-quinone. As the iodide of the electrolyte (1), there can be used metal iodides such as LiI, NaI, KI, CsI and $CaI_2$, quaternary ammonium iodides such as tetralkylammonium iodide, pyridinium iodide and imidazolium iodide and the like. As the bromide of the electrolyte (2), there can be used metal bromides such as LiBr, NaBr, KBr, CsBr and $CaBr_2$, quaternary ammonium bromides such as a tetralkylammonium bromide and pyridinium bromide and the like. Among these electrolyte materials, especially preferred is a combination of $I_2$ and LiI or the quaternary ammonium iodide such as pyridinium iodide or imidazolium iodide. These electrolyte materials may be used solely or in combination thereof.

The solvent of the electrolyte layer 6 is preferably a solvent having low viscosity, high ionic mobility and sufficient ionic conductance. Examples of such a solvent include: (1) carbonates such as ethylene carbonate and propylene carbonate; (2) heterocyclic compounds such as 3-methyl-2-oxazolidinone; (3) ethers such as dioxane and diethyl ether; (4) chain ethers such as ethylene glycol dialkylethers, propylene glycol dialkylethers, polyethylene glycol dialkylethers and polypropylene glycol dialkylethers; (5) monoalcohols such as methanol, ethanol, ethylene glycol monoalkylethers, propylene glycol monoalkylethers, polyethylene glycol monoalkylethers and polypropylene glycol monoalkylethers; (6) polyalcohols such as ethylene glycol, propylene glycol, polyethylene glycol, polypropylene glycol and glycerin; (7) nitriles such as acetonitrile, glutarodinitrile, methoxyacetonitrile, propionitrile and benzonitrile; and (8) aprotic polar solvents such as dimethylsulfoxide and sulfolane.

The thickness of the electrolyte layer 6 is not particularly restricted and can be adjusted to 200 $\mu$m or smaller, especially 50 $\mu$m or smaller (normally 1 $\mu$m or larger). When the thickness of the electrolyte layer 6 is in the range of 200 $\mu$m or smaller, it is possible to obtain a sufficient increase in photoelectric conversion efficiency.

In the dye-sensitized solar cell 201, the electrolyte layer 6 is formed between the semiconductor electrode 3 and the catalyst layer 52 with the electrolyte solution being impregnated in cavities of the semiconductor electrode 3 of fine-particle aggregate. The electrolyte layer 6 is formed between the semiconductor electrode 3 and the light-transmitting catalyst layer 51, in the dye-sensitized solar cell 203, with the electrolyte solution being impregnated in cavities of the semiconductor electrode 3 of fine-particle aggregate.

The preparation method of the electrolyte layer 6 is not particularly restricted. The electrolyte layer 6 can be prepared by, for example, providing a seal of resin or glass in space around the semiconductor electrode 3 between the light-transmitting conductive layer 21 and the ceramic substrate 4 or the catalyst layer 52 in the dye-sensitized solar cell 201 or between the light-transmitting catalyst layer 51 or the light-transmitting conductive layer 21 and the ceramic substrate 4 or the conductive layer 22 in the dye-sensitized solar cell 203, and then, injecting the electrolytic solution into the thus-sealed space. In this case, the electrolytic solution is injected into the sealed space through an injection hole of the first base member 101 or the second base member 102 and through an injection hole of the first base member 103 or the second base member 104. The injection hole can be formed in either of the first base member 101 and the second base member 102 or in either of the first base member 103 and the second base member 104. However, the injection hole is not easy to perforate in the first base member 101 e.g. when the light-transmitting substrate 1 is a glass substrate. It is easier to perforate the injection hole in the ceramic substrate 4 than in the glass substrate. The injection hole is formed very easily in the ceramic substrate 4 by the use of a punching machine especially when the ceramic substrate 4 is still green. It is thus desirable to form the injection hole in the second base member 102, 104. Although one injection hole is adequate to inject the electrolytic solution, another hole could conceivably be formed for air vent. The formation of such an air vent hole allows easier injection of the electrolytic solution.

Examples of the resin used for the sealing around the semiconductor electrode 3 include thermosetting resins such as epoxy resins, urethane resins and thermosetting polyester resins. The seal can alternatively be provided by the glass. It is desirable to seal with the glass especially when the solar cell requires long-term durability.

As described above, the dye-sensitized solar cell 201 according to the first embodiment in which the semiconductor electrode 3 is located on the side of the light-transmitting substrate 1, the dye-sensitized solar cell 202 according to one modification of the first embodiment, the dye-sensitized solar cell 203 according to the second embodiment in which the semiconductor electrode 3 is located on the side of the ceramic substrate 4 and the dye-sensitized solar cell 204 according to one modification of the second embodiment are able to secure practically sufficient power generation efficiencies and, at the same time, attain high strength and excellent durability and allow significant cost reductions due to the installation of the ceramic substrate 4 in each solar cell.

Each of the catalyst layer 52 and the light-transmitting catalyst layer 51 is prepared using either the catalytically active material or at least one of the metals, the conductive oxides and the conductive resins containing therein the catalytically active material and serves as a counter electrode for the semiconductor electrode 3. The dye-sensitized solar cells 201-204 are thus able to attain adequate power generation efficiencies.

The seal of resin or glass is provided around the semiconductor electrode 3 between the light-transmitting conductive layer 21 and the ceramic substrate 4 or the catalyst layer 52 or between the light-transmitting catalyst layer 51 or the light-transmitting conductive layer 21 and the ceramic substrate 4 or the conductive layer 22. The semiconductor electrode 3, the electrolyte layer 6 and the like can be protected properly by selecting the seal material according to the usage conditions of the solar cell and the kind of product in which the solar cell is mounted etc. so that each of the dye-sensitized solar cells 201-204 becomes high in durability.

Further, the collector electrode 81, 82 is provided between the ceramic substrate 4 and the catalyst layer 52 and between the light-transmitting substrate 1 and the light-transmitting catalyst layer 51 or between the light-transmitting catalyst layer 51 and the light-transmitting conductive layer 21. The dye-sensitized solar cells 201-204 become thus able to attain sufficient power generation efficiencies even when the catalyst layer 52 or the like is high in resistance.

The collector electrode 81, 82 is high in corrosion resistance, when containing tungsten, so that each of the dye-sensitized solar cells 201-204 becomes able to attain excellent durability.

When the ceramic substrate 4 contains alumina, each of the dye-sensitized solar cells 201-204 becomes able to attain higher durability owing to high strength and corrosion resistance of alumina.

The present invention will be described in more detail with reference to the following examples of the dye-sensitized solar cell 201 and 202. It should be however noted that the following examples are only illustrative and not intended to limit the invention thereto.

Example 1

(1) Production of First Base Member 101

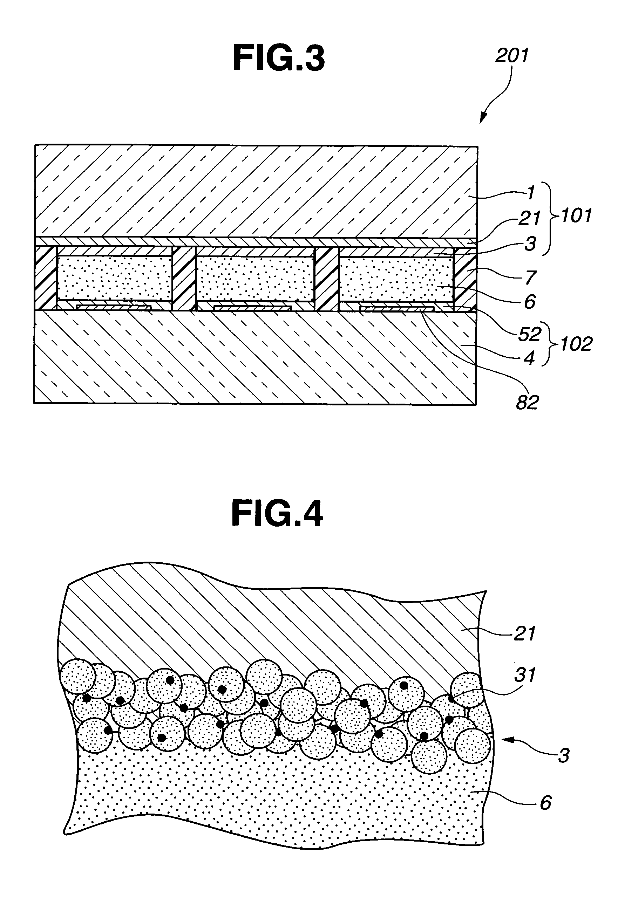

A glass substrate having a length of 100 mm, a width of 100 mm and a thickness of 1 mm was prepared as a light-transmitting substrate 1. A light-transmitting conductive layer 21 of fluorine-doped tin oxide was formed with a thickness of 300 nm on a surface of the substrate 1. A paste containing titania particles of 10 to 20 $\mu$m in diameter (available under the trade name of "Ti-Nonoxide D/SP" from Solaronix) was applied to a surface of the light-transmitting conductive layer 21 by screen printing, dried at 120°C for 1 hour and sintered at 480°C for 30 minutes, thereby forming three pieces of electrode body for preparation of semiconductor electrode 3. The thus-obtained laminate was immersed in an ethanol solution of ruthenium complex (available under the trade name of "535bis-TBA" from Solaronix) for 10 hours to impregnate the pieces of electrode body with the sensitizing dye 31 of ruthenium complex as partly enlarged in FIG. 4 to form three pieces of semiconductor electrode 3 each with a length of 80 mm, a width of 27 mm and a thickness of 20 $\mu$m as shown in FIGS. 1 and 3. The first base member 101 was then completed. A lead electrode 91 of platinum was attached to an end portion of the light-transmitting conductive layer 21.

(2) Production of Second Base Member 102

Next, 90.5 mass% of aluminum powder, 1 mass% of magnesia powder and 4 mass% of silica powder was mixed together, subjected to wet grinding by means of a ball mill for 12 hours, dewatered and dried. The thus-obtained powder mixture was blended with 3 mass% of isobutyl ether methacrylate, 1 mass% of nitrocellulose, 0.5 mass% of dioctyl phthalate and a solvent of trichloroethylene and n-butanol by means of a ball mill, thereby forming a slurry of alumina powder. An alumina green sheet having a thickness of 1.2 mm was prepared by degassing the alumina powder slurry under a reduced pressure, molding the slurry in sheet form by flow casting and cooling gradually to vaporize the solvent. A metalized ink containing tungsten powder was prepared in a similar manner. Conductive coating layers for collector electrode 82 were formed with a thickness of 6 $\mu$m by screen printing using the tungsten metalized ink on a surface of the alumina green sheet. The coating layers were dried at 100°C for 30 minutes and pressed with 0.2 MPa for improvement in smoothness. Subsequently, a metalized ink containing platinum powder was prepared. Conductive coating layers having a thickness of 1 $\mu$m were formed by screen printing using the using the platinum metalized ink on the surfaces of the alumina green sheet and the conductive coating layers for the collector electrode 82. The thus-obtained laminate was integrally sintered at 1500°C in a reduction atmosphere. The second base member 102 was then produced in which three pieces of catalyst layer 52 having a length of 80 mm, a width of 27 mm and a thickness of 20 $\mu$m and collector electrode 82 having a thickness of 5 $\mu$m were formed on the surface of the alumina substrate 4 of 1.0 mm in thickness as shown in FIGS. 2 and 3. A lead electrode 92 of platinum was attached to an end portion of the alumina substrate 4 and connected with each piece of the collector electrode 82 between the alumina substrate 4 and the catalyst layer 52.

(3) Manufacturing of Dye-sensitized Solar Cell 201

An adhesive sheet of thermoplastic resin having a thickness of 60 $\mu$m (available under the trade name of "SX1170-60" from Solaronix) was provided to a portion of the alumina substrate 4 of the second base member 102 on which the catalyst layer 52 had not been formed. The first base member 101 was then arranged on the second base member 102 in such a manner that the semiconductor electrode 3 of the first base member 101 faces the catalyst layer 52 of the second base member 102. The thus-obtained laminate was placed on a hot plate whose temperature had been adjusted to 100°C, with the aluminum substrate 4 being directed downward, and heated for 5 minutes to form a joint 7 between the light-transmitting conductive layer 21 of the first base member 101 and the aluminum substrate 4 of the second base member 102. An iodine electrolytic solution (available under the trade name of "PN-50" from Solaronix) was injected into the respective spaces between the semiconductor electrode 3 and the catalyst layer 52 through injection holes in given positions of the second base member 102. The dye-sensitized solar cell 201 was completed in this manner. After the injection of the iodine electrolytic solution, the injection holes were sealed with the same adhesive as above.

(4) Performance Evaluation of Dye-sensitized Solar Cell 201

Artificial sunlight was irradiated onto the dye-sensitized solar cell 201 produced by the above procedures (1) to (3) with an intensity of 100 mW/1cm$^2$ by means of a solar simulator whose spectrum had been adjusted to AM 1.5. The solar cell 201 characteristically showed an open-circuit voltage of 0.7 V.

Example 2

A dye-sensitized solar cell 202 was manufactured by the same procedures as in Example 1, except that pieces of nickel collector electrode 81 each having a width of 500 $\mu$m and a thickness of 5 $\mu$m were additionally formed around respective pieces of semiconductor electrode 3, as shown in FIGS. 5 and 6, as in the case of the collector electrode 82 of Example 1.

The performance of the dye-sensitized solar cell 202 was then evaluated in the same manner as in Example 1. The solar cell 202 characteristically showed an open-circuit voltage of 0.73 V. It is thus obvious that the performance of the dye-sensitized solar cell 202 was improved by the arrangement of not only the collector electrode 82 in the anode side but also the collector electrode 81 in the cathode side.

Although the present invention has been described with reference to the specific embodiments of the invention, the invention is not limited to the above-described embodiments. Various modification and variation of the embodiments described above will occur to those skilled in the art in light of the above teaching.

**Claims**

1. A dye-sensitized solar cell, comprising:

   a first base member having a light-transmitting substrate, a light-transmitting conductive layer formed on a surface of the light-transmitting substrate and a semiconductor electrode formed on a surface of the light-transmitting conductive layer and containing a sensitizing dye;
   a second base member having a ceramic substrate and a catalyst layer formed on a surface of the ceramic substrate in such a manner that the catalyst layer faces the semiconductor electrode; and
   an electrolyte layer formed between the semiconductor electrode and the catalyst layer.

2. The dye-sensitized solar cell according to claim 1, wherein the catalyst layer is prepared from either a catalytically active material or at least one of metals, conductive oxides and conductive resins containing therein a catalytically active material.

3. The dye-sensitized solar cell according to claim 1 or 2, wherein a seal of resin or glass is provided in space between the light-transmitting conductive layer and the ceramic substrate or the catalyst layer at a location around the semiconductor electrode.

4. The dye-sensitized solar cell according to any one of claims 1 to 3, further comprising a collector electrode between the ceramic substrate and the catalyst layer.

5. The dye-sensitized solar cell according to claim 4, wherein the collector electrode contains tungsten.

6. A dye-sensitized solar cell, comprising:

a first base member having a light-transmitting substrate and a light-transmitting catalyst layer formed on a surface of the light-transmitting substrate;

a second base member having a ceramic substrate, a conductive layer formed on a surface of the ceramic substrate and a semiconductor electrode containing a sensitizing dye and formed on a surface of the conductive layer in such a manner that the semiconductor electrode faces the light-transmitting catalyst layer; and

an electrolyte layer formed between the light-transmitting catalyst layer and the semiconductor electrode.

7. The dye-sensitized solar cell according to claim 6, further comprising a light-transmitting conductive layer between the light-transmitting substrate and the light-transmitting catalyst layer.

8. The dye-sensitized solar cell according to claim 6 or 7, wherein the light-transmitting catalyst layer is prepared from either a catalytically active material or at least one of metals, conductive oxides and conductive resins containing therein a catalytically active material.

9. The dye-sensitized solar cell according to any one of claims 6 to 8, wherein a seal of resin or glass is provided in space between the light-transmitting catalyst layer and the ceramic substrate or the conductive layer at a location around the semiconductor electrode.

10. The dye-sensitized solar cell according to any one of claims 7 or 8, wherein a seal of resin or glass is provided in space between the light-transmitting conductive layer and the ceramic substrate or the conductive layer at a location around the semiconductor electrode.

11. The dye-sensitized solar cell according to any one of claims 6 to 10, further comprising a collector electrode between the light-transmitting substrate and the light-transmitting catalyst layer.

12. The dye-sensitized solar cell according to any one of claims 6 to 11, further comprising a collector electrode between the light-transmitting catalyst layer and the light-transmitting conductive layer.

13. The dye-sensitized solar cell according to any one of claim 11 or 12, wherein the collector electrode contains tungsten.

14. The dye-sensitized solar cell according to any one of claims 1 to 13, wherein the ceramic substrate contains alumina.

**Amended claims under Art. 19.1 PCT**

1. (Amended) A dye-sensitized solar cell, comprising:

a first base member having a light-transmitting substrate, a light-transmitting conductive layer formed on a surface of the light-transmitting substrate and a semiconductor electrode formed on a surface of the light-transmitting conductive layer and containing a sensitizing dye;

a second base member having a ceramic substrate and a catalyst layer formed on a surface of the ceramic substrate in such a manner that the catalyst layer faces the semiconductor electrode;

an electrolyte layer formed between the semiconductor electrode and the catalyst layer; and

a collector electrode formed between the ceramic substrate and the catalyst layer and containing tungsten.

2. (Amended) The dye-sensitized solar cell according to claim 1, wherein the ceramic substrate contains alumina.

3. (Amended) The dye-sensitized solar cell according to claim 1 or 2, wherein the catalyst layer is prepared from either a catalytically active material or at least one of metals, conductive oxides and conductive resins containing therein a catalytically active material.

4. (Amended) The dye-sensitized solar cell according to any one of claims 1 to 3, wherein a seal of resin or glass is provided in space between the light-transmitting conductive layer and the ceramic substrate or the catalyst layer at a location around the semiconductor electrode.

5. (Cancelled)

**6.** (Amended) A dye-sensitized solar cell, comprising:

a first base member having a light-transmitting substrate and a light-transmitting catalyst layer formed on a surface of the light-transmitting substrate;
a second base member having a ceramic substrate, a conductive layer formed on a surface of the ceramic substrate and a semiconductor electrode containing a sensitizing dye and formed on a surface of the conductive layer in such a manner that the semiconductor electrode faces the light-transmitting catalyst layer;
an electrolyte layer formed between the light-transmitting catalyst layer and the semiconductor electrode; and
a collector electrode formed between the light-transmitting substrate and the light-transmitting catalyst layer and containing tungsten.

**7.** (Amended) The dye-sensitized solar cell according to claim 6, wherein the ceramic substrate contains alumina.

**8.** (Amended) The dye-sensitized solar cell according to claim 6 or 7, further comprising a light-transmitting conductive layer between the light-transmitting substrate and the light-transmitting catalyst layer.

**9.** (Amended) The dye-sensitized solar cell according to any one of claims 6 to 8, wherein the light-transmitting catalyst layer is prepared from either a catalytically active material or at least one of metals, conductive oxides and conductive resins containing therein a catalytically active material.

**10.** (Amended) The dye-sensitized solar cell according to any one of claims 6 to 9, wherein a seal of resin or glass is formed between the light-transmitting catalyst layer and the ceramic substrate or the conductive layer at a location around the semiconductor electrode.

**11.** (Amended) The dye-sensitized solar cell according to any one of claims 8 to 10, wherein a seal of resin or glass is provided between the light-transmitting conductive layer and the ceramic substrate or the conductive layer at a location around the semiconductor electrode.

**12.** (Amended) The dye-sensitized solar cell according to any one of claims 8 to 11, wherein the collector electrode is formed between the light-transmitting catalyst layer and the light-transmitting conductive layer.

**13.** (Cancelled)

**14.** (Cancelled)

**Statement under Art. 19.1 PCT**

In order to obtain the effect that the dye-sensitized solar cell attains improved charge collection efficiency while securing strength and corrosion resistance, claims 1 and 6 are amended to clarify that the collector electrode is formed between the ceramic substrate and the catalyst layer and contains therein tungsten, and claims 2 and 7 are amended to clarify that the ceramic substrate contains alumina.
In response to the above amendments, original claims 2, 3 and 8 to 11 are renumbered 3, 4 and 9 to 12, respectively, and original claims 5, 13 and 14 are cancelled.
Claim 12 is amended to clarify that the collector electrode is provided between the light-transmitting catalyst layer and the light-transmitting conductive layer in view of the consistency between amended claims 6 and 8.

# FIG.1

# FIG.2

# FIG.3

# FIG.4

# FIG.5

# FIG.6

# FIG.7

# FIG.8

## INTERNATIONAL SEARCH REPORT

| International application No. |
|---|
| PCT/JP2004/014584 |

A.  CLASSIFICATION OF SUBJECT MATTER
Int.Cl⁷  H01M14/00, H01L31/04

According to International Patent Classification (IPC) or to both national classification and IPC

B.  FIELDS SEARCHED

Minimum documentation searched (classification system followed by classification symbols)
Int.Cl⁷  H01M14/00, H01L31/04

Documentation searched other than minimum documentation to the extent that such documents are included in the fields searched
Jitsuyo Shinan Koho        1926-1996    Toroku Jitsuyo Shinan Koho    1994-2004
Kokai Jitsuyo Shinan Koho   1971-2004    Jitsuyo Shinan Toroku Koho    1996-2004

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2002-8740 A  (Yamaha Corp.),<br>11 January, 2002 (11.01.02),<br>Claims 1 to 4; Par. Nos. [0017] to [0019];<br>examples<br>(Family: none) | 1-4<br>5,7,14 |
| X<br>Y | JP 2002-117912 A  (Seiko Epson Corp.),<br>19 April, 2002 (19.04.02),<br>Claims 1 to 28; Par. No. [0053]; examples<br>(Family: none) | 6,8-10<br>7,11-14 |
| X<br>Y | JP 2001-266964 A  (Seiko Epson Corp.),<br>28 September, 2001 (28.09.01),<br>Claims 1 to 30; Par. No. [0060]; examples<br>(Family: none) | 6,8-10<br>7,11-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>28 December, 2004 (28.12.04) | Date of mailing of the international search report<br>18 January, 2005 (18.01.05) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

International application No.

PCT/JP2004/014584

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2001-93590 A   (Canon Inc.),<br>06 April, 2001 (06.04.01),<br>Claims 1 to 19; Par. No. [0045]; examples<br>& EP 1087446 A2        & US 6649824 B1 | 1-4,6,8-10<br>5,7,11-14 |
| Y | JP 2002-299665 A   (Toshiba Corp.),<br>11 October, 2002 (11.10.02),<br>Par. No. [0049]<br>(Family: none) | 14 |
| Y | JP 2000-285979 A   (Toshiba Corp.),<br>13 October, 2000 (13.10.00),<br>Par. No. [0039]<br>(Family: none) | 14 |
| Y | JP 2002-94096 A   (Canon Inc.),<br>29 March, 2002 (29.03.02),<br>Claims 1 to 9; Par. No. [0046]; examples<br>(Family: none) | 5,13 |
| Y | JP 2002-313443 A   (Aisin Seiki Co., Ltd.),<br>25 October, 2002 (25.10.02),<br>Par. No. [0020]; examples<br>(Family: none) | 5,13 |
| Y | JP 2003-123863 A   (Mitsui Chemicals, Inc.),<br>25 April, 2003 (25.04.03),<br>Par. Nos. [0061] to [0063]<br>(Family: none) | 5,13 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI01220380 B

**Non-patent literature cited in the description**

- *Nature,* 1991, vol. 353, 737-740